Europäisches Patentamt

European Patent Office

Office européen des brevets

(19)

(11) Numéro de publication: **0 184 527**
**A1**

(12)

# DEMANDE DE BREVET EUROPEEN

(21) Numéro de dépôt: **85420210.8**

(22) Date de dépôt: **21.11.85**

(51) Int. Cl.⁴: **B 65 G 1/04**

(30) Priorité: **06.12.84 FR 8418851**

(43) Date de publication de la demande:
**11.06.86 Bulletin 86/24**

(84) Etats contractants désignés:
**BE CH DE GB IT LI**

(71) Demandeur: **Crebier, Gérard**
**Le Bérard Coublevie**
**F-38500 Voiron(FR)**

(72) Inventeur: **Crebier, Gérard**
**Le Bérard Coublevie**
**F-38500 Voiron(FR)**

(74) Mandataire: **Laurent, Michel et al,**
**20 rue Louis Chirpaz Boîte postale no. 32**
**F-69131 Ecully Cedex(FR)**

(54) **Installation permettant le stockage, la distribution et la remise en place de manière automatique de cassettes, livres ou articles similaires.**

(57) Installation permettant le stockage, la distribution et la remise en place de manière automatique de cassettes.

Elle comporte une enceinte (1) présentant une seule ouverture (5) pour l'introduction et la délivrance des articles (7) ainsi que des moyens de vérification (22) desdits articles disposés à l'intérieur de l'enceinte (1) en regard de l'ouverture (5).

Un chariot mobile (9) permet de mettre en place et d'enlever les cassettes (7) des casiers de rangement (2, 3), ce chariot pouvant prendre quatre positions décalées de 90° les unes par rapport aux autres.

FIG.1

EP 0 184 527 A1

## INSTALLATION PERMETTANT LE STOCKAGE, LA DISTRIBUTION ET LA REMISE EN PLACE DE MANIERE AUTOMATIQUE DE CASSETTES, LIVRES OU ARTICLES SIMILAIRES.

La présente invention concerne une installation perfectionnée permettant de stocker, distribuer et remettre en place de manière automatique des cassettes, telles que des cassettes vidéo ou tout autre article similaire destiné à la location.

L'un des principaux problèmes qui se pose dans le domaine de la location d'articles tels que les vidéo cassettes est celui du rangement, classement des objets à louer. De plus, se pose également le problème de la détection de la fraude lorsque la cassette rendue n'est pas l'original mais une copie. Si la location est effectuée par contact direct entre l'utilisateur et le commerçant, de tels problèmes peuvent être résolus de manière satisfaisante, mais il est évident que la rentabilité est faible et surtout que le service ne peut pas être rendu vingt quatre heures sur vingt quatre.

Par suite, de plus en plus, on propose des installations permettant aux clients d'effectuer les opérations de location en "self-service". Si la distribution des articles ne pose aucun problème particulier, il n'en n'est pas de même en ce qui concerne l'opération de remise après utilisation.

Il a certes été récemment proposé des installations qui permettent non seulement la distribution mais la récupération et la remise en place des objets après utilisation, mais de telles installations présentent l'inconvénient d'être d'une grande complexité, encombrante, et surtout ne permettent pas de détecter s'il y a eu substitution de l'original par une copie.

L'invention vise à résoudre ces problèmes.

D'une manière générale, elle concerne une installation permettant le stockage, la distribution et la remise en place de manière automatique de cassettes ou articles similaires qui, non seulement permet d'assurer les services précités mais également, autorise la gestion du stock, du compte client, le contrôle de la vérification de l'objet lorsqu'il est rendu. L'installation selon l'invention se présente sous la forme d'une enceinte contenant :

- des casiers de rangement pour les articles destinés à être loués ;

- un chariot mobile de mise en place et d'enlèvement desdits articles ;

- et un système de vérification,
et elle se caractérise par le fait que :

- l'enceinte présente une seule ouverture pour l'introduction et la délivrance des articles, les moyens de vérification desdits articles étant disposés à l'intérieur de l'enceinte en regard de cette ouverture ;

- les casiers de rangement se présentent sous la forme de deux rangées de rayonnages parallèles disposés de part et d'autre d'un plan de symétrie passant par l'ouverture d'introduction et de délivrance des objets ;

- le chariot mobile de mise en place et d'enlèvement est déplacé longitudinalement et verticalement selon le plan de symétrie précité et comporte un système de manipulation des objets pouvant prendre quatre positions décalées de 90° les unes par rapport aux autres, à savoir deux opposées selon l'axe de la machine et deux perpendiculaires à ce plan en regard des casiers de rangement.

Une telle installation est associée à des moyens permettant une utilisation au moyen d'une carte magnétique, moyens de type connu et qui ne seront pas décrits en détail dans la suite de la description et qui se composent essentiellement :

- d'une façade enfichable dans le mur ou la vitrine du magasin, cette façade comprenant :

. un écran de visualisation et un clavier de
commande permettant à l'utilisateur de dialoguer avec l'appareil,

. un lecteur de badge magnétique permettant de
réglementer l'accès,

. et un système de codage-décodage des articles
(cassettes par exemple) permettant le contrôle et le rangement de ces articles ;

- une armoire électronique placée à l'intérieur du
magasin, cette armoire comprenant essentiellement l'ordinateur de commande et de gestion permettant d'assurer les
différentes fonctions de la machine, à savoir la gestion
des cassettes, du compte-client, des comptes généraux. .

Bien entendu, un tel ensemble électronique comporte
des moyens de sauvegarde des fichiers, des programmes,
éventuellement une imprimante ou tout autre élément permettant d'assurer le dialogue ordinateur à commerçant.

L'invention et les avantages qu'elle apporte seront
cependant mieux compris grâce à l'exemple de réalisation
donné ci-après à titre indicatif et non limitatif, et qui
est illustré par les schémas annexés dans lesquels :

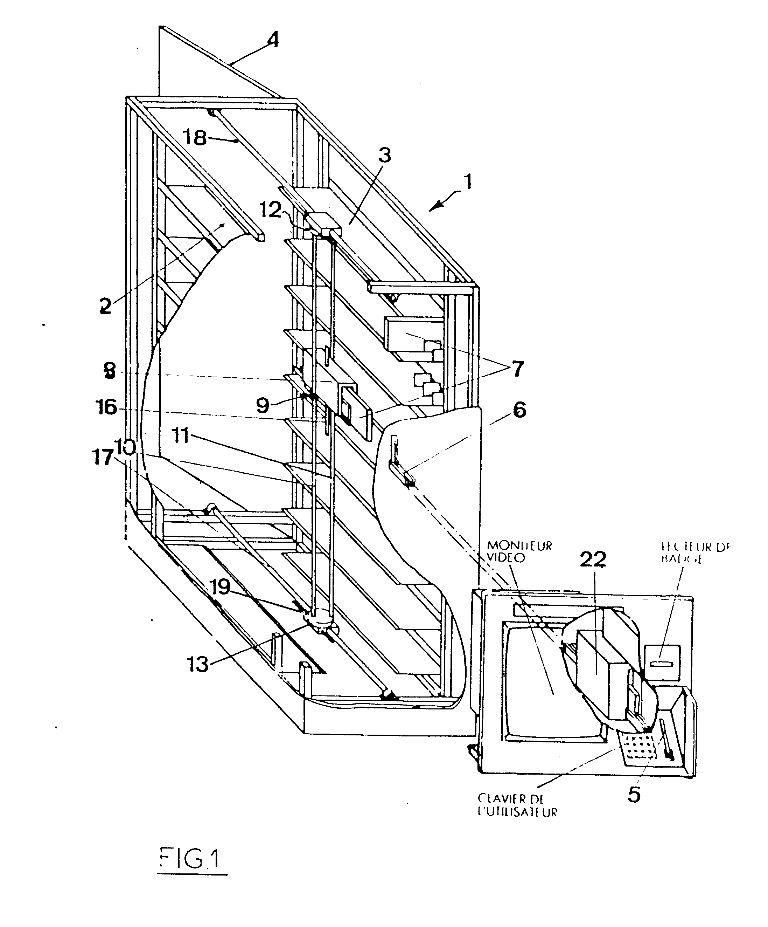

- la figure 1 est une vue schématique, en perspective
éclatée de l'ensemble d'une installation conforme à l'invention, lesmoyens électroniques (ordinateur..) n'étant
pas représentés par mesure de simplification ;

- les figures 2,3 et 4 sont des vues de détail montrant la structure et le fonctionnement du système de
vérification et de codage des articles (cassettes par exemple) que comporte une telle installation ;

- les figures 5a à 5f et 6a à 6e illustrent schématiquement les différentes phases de fonctionnement du
système de vérification et de codage des cassettes, à savoir pour les figures 5a à 5f la procédure de codage et
pour les figures 6a à 6e la procédure de rangement lorsqu'un article est rendu ;

- la figure 7 est une vue en élévation schématique illustrant la structure du système permettant le déplacement du chariot mobile que comporte une telle installation ;

- les figures 8,9 et 10 sont des vues de détail du système de préhension permettant de manipuler les cassettes.

Si l'on se reporte aux schémas annexés, l'installation conforme à l'invention se compose essentiellement d'une enceinte (1) à l'intérieur de laquelle sont disposés des casiers de rangement (2,3). Ces casiers de rangement (2,3) se présentent sous la forme de deux rangées de rayonnages parallèles, espacés de part et d'autre du plan de symétrie de l'enceinte.

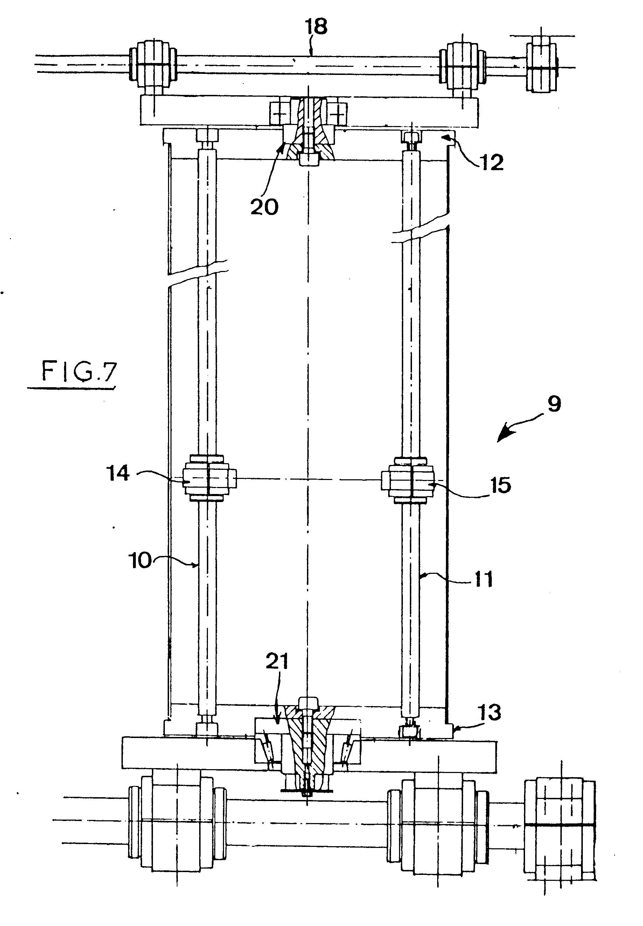

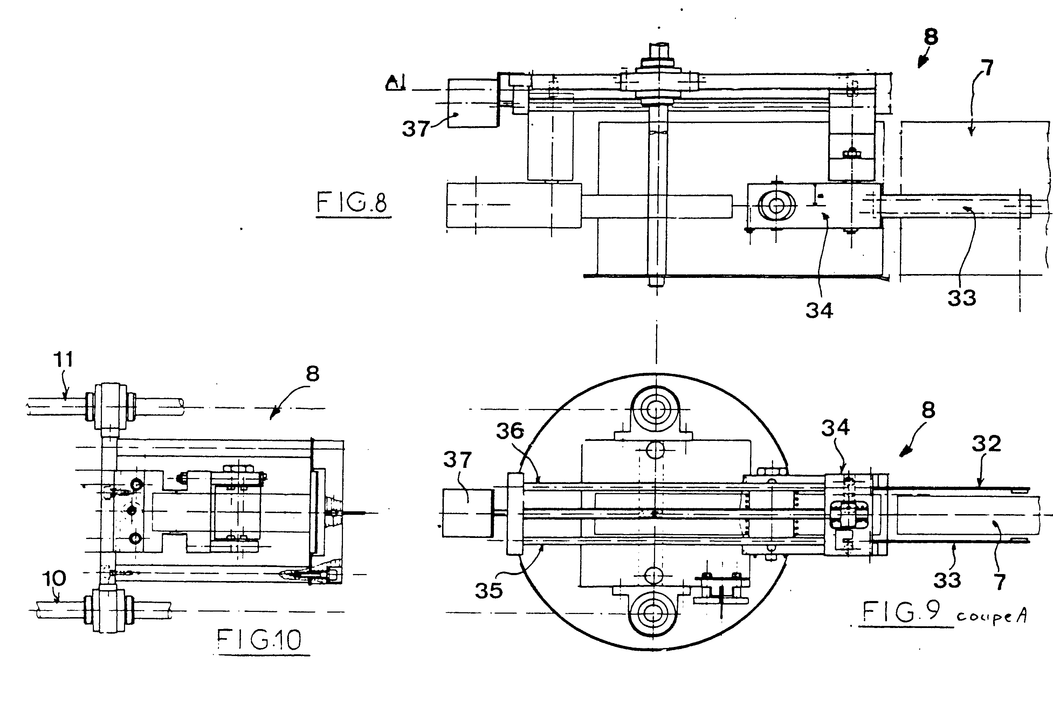

Cette enceinte (1) est disposée à l'intérieur du magasin et présente sur sa face arrière une porte (4) permettant l'accès par le commerçant. Une seule ouverture (5) est prévue en façade pour permettre l'introduction et la récupération des cassettes. Cette ouverture (5) est disposée dans l'axe de l'enceinte et ses dimensions sont fonction de l'article. Elle est prolongée par un rail de guidage (6) permettant de présenter ou de recevoir la cassette (7) au système de préhension (8) qui sera vu plus en détail dans la suite de la description et qui est illustré par les figures 8 à 10. Ce système de préhension (8) des cassettes (7) est monté sur un chariot, désigné par la référence générale (9) illustré en détail à la figure 7. Ce chariot (9) est constitué essentiellement de deux montants (10,11) dont les extrémités sont fixées à des plateaux supérieur (12) et inférieur (13). Sur ces montants (10,11), sont montées des glissières (14,15) supportant le système de préhension (8) des cassettes proprement dites. Le coulissement vertical du système de préhension (8) est obtenu au moyen de câbles (16). Le chariot (9) coulisse sur des arbres de guidage inférieur et supérieur (17,18), cette commande étant également réalisée au moyen d'un câble (19).

Par ailleurs, les plateaux (12,13) sont montés dans des paliers (20,21) permettant à l'ensemble de tourner de manière à pouvoir prendre quatre positions à 90° les unes des autres, à savoir deux positions selon l'axe de l'installation permettant de faire saisir les cassettes soit à partir de l'orifice d'entrée (5) soit à partir de la porte (4) fixée à l'intérieur du magasin et deux positions en regard des rayonnages (2,3) destinés à recevoir les cassettes (7).

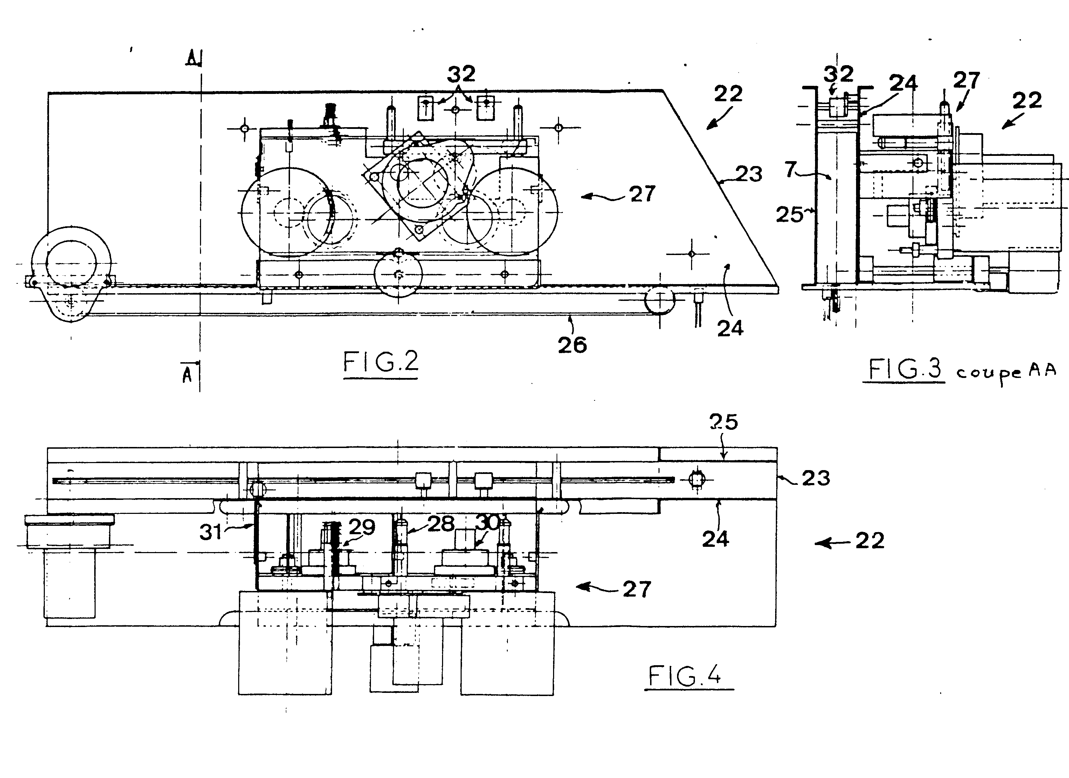

L'installation conforme à l'invention comporte, immédiatement à l'arrière de l'orifice d'entrée et de sortie (5) des cassettes, un système de vérification et de codage (22), système illustré en détail aux figures 2,3 et 4 et dont le fonctionnement est schématisé aux figures 5a à 6e.

Un tel système de vérification et de codage est constitué essentiellement par un boitier comportant un orifice (23) disposé dans le prolongement de l'orifice (5) d'entrée et de sortie des cassettes. Cet orifice (23) est prolongé par deux plaques latérales (24,25) positionnant l'objet. Un élément transporteur (26) est prévu en-dessous. L'ensemble de vérification et de codage des cassettes est disposé latéralement est désigné par la référence générale (27). Cet ensemble, déplaçable transversalement, comporte un élément de centrage (28) destiné à déverrouiller la cassette et des galets d'entraînement (29,30). Par ailleurs, une butée (31) est prévue pour soulever le couvercle de ladite cassette. La tête de lecture et de codage proprement dite (32) est disposée au-dessus.

La procédure de codage est illustrée par les figures 5a à 5f.

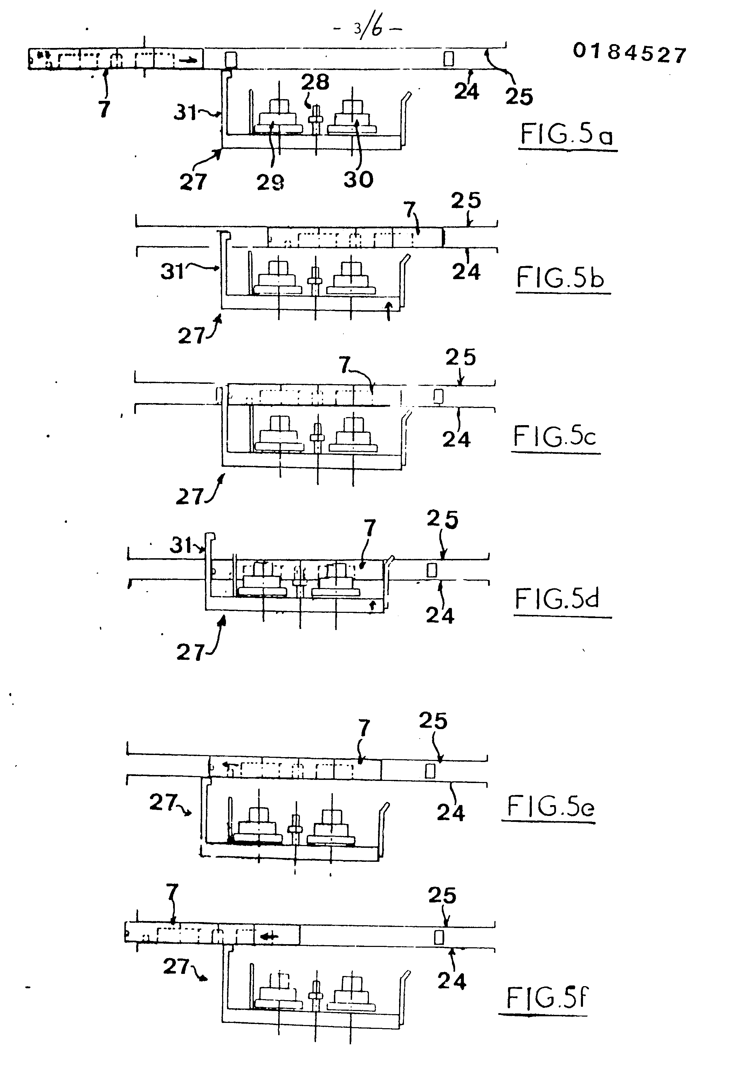

Le codage des cassettes est effectué une fois pour toute. Pour cela, la cassette (7) (figure 5a) est amenée au moyen du chariot (9) entre les plaques (24,25) de l'ensemble (22). Des détecteurs assurent le positionnement parfait de ladite cassette au regard de l'ensemble de codage (27). La gachette étant positionnée (figure 5b), l'ensemble (27) est avancé, le bras (31) repoussant le couvercle (figure 5c). L'élément de centrage (28) et les galets d'entrainement (29,30) sont introduits à l'intérieur des évidements correspondants de la cassette (figure 5d). Si le film n'est pas à son point de départ, les éléments (29,30) provoquent son entraînement. Le codage est alors effectué puis l'ensemble (27) est retiré (figure 5f) et la cassette ramenée à son emplacement de stockage (figure 5f) par le chariot (9).

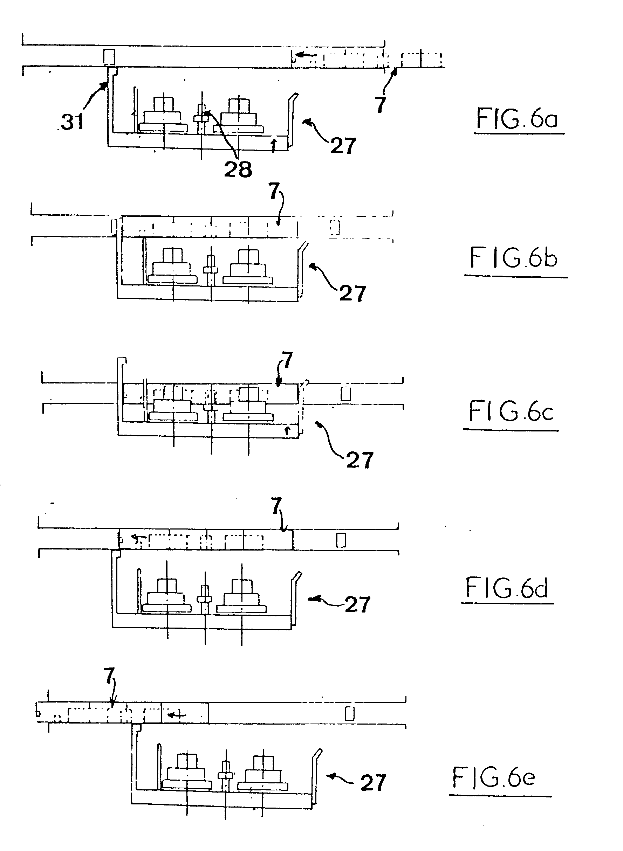

Lors de la remise d'une cassette par l'utilisateur, la procédure suivante a lieu (figure 6a). L'utilisateur présente la cassette dans l'orifice (5) (figure 6a) et, par suite à l'intérieur du système de vérification (22). La cassette arrivant de la façade (figure 6a), l'ensemble (27) avance (figure 6b) et le bras (31) déverrouillent le couvercle. Le magnéto est avancé (figure 6c), provoque éventuellement la remise au départ du film et vérifie le code marqué sur ledit film (figure 6c). Si le code est correct, l'ensemble (31) est retiré (figure 6d) et la cassette est alors prise par l'ensemble de préhension (9) (figure 6e) pour être amené à son emplacement de stockage. En revanche, s'il s'agit d'une copie ne portant pas le code préalablement marqué, la cassette n'est pas reclassée et l'ensemble (31) soit la redonne au client soit l'absorbe et la range dans un casier litiges, la carte magnétique du client étant éventuellement également absorbée.

En ce qui concerne le système de préhension (9) permettant de manipuler les cassettes, sa structure et son fonctionnement ressortent des figures 8 à 10. Un tel système de préhension comporte essentiellement deux pinces (32, 33) qui, d'une part, peuvent être écartées l'une de l'autre au moyen de l'ensemble à ressort (34) et, d'autre part, peuvent recevoir un mouvement d'avance et recul le long de glissières (35) et (36), ces déplacements étant commandés par un moteur ou autre élément équivalent (37). Un tel système à pinces permet de pouvoir saisir des objets pouvant avoir des dimensions différentes.

La mise en oeuvre d'une telle installation est la suivante.

Concernant le chargement des cassettes dans le système de rangement :

Le commerçant prépare la machine pour effectuer le chargement de l'ordinateur. Il entre ensuite le film par l'orifice d'entrée et de sortie des cassettes, il écrit le titre (toujours à l'aide de l'ordinateur) et vérifie que ce titre est bien inscrit sur l'écran de visualisation présent en façade. La cassette est alors codée selon le processus illustré par les figures 5a à 5f et est répertoriée dans la mémoire de l'ordinateur. Elle est rangée automatiquement par l'ensemble (9) dans le casier que lui a affecté l'ordinateur. La procédure est la même pour toutes les cassettes ainsi que pour le remplacement d'une cassette par une autre.

Concernant les opérations faites par un client :

Ce dernier introduit tout d'abord son badge pour avoir accès au clavier que comporte l'installation. L'installation vérifie si le client est en règle (nombre de cassettes sorties et non rendues, valeur du solde..).

En fonction de ces informations, il a ou non l'autorisation d'effectuer une location. Dans cette hypothèse, il choisit le film souhaité et l'ensemble de préhension (9) est amené au niveau du lieu de stockage de la cassette, saisit cet élément et le présente à l'orifice de sortie.

Lorsque le client souhaite rendre une cassette, après avoir introduit son badge et vérification, il introduit les cassettes, le contrôle de ces dernières étant alors effectué selon le processus illustré par les figures 6a à 6b. S'il n'y a pas eu fraude, l'ensemble de préhension saisit la cassette et la replace dans son casier.

Une telle installation présente de nombreux avantages tant pour l'utilisateur que pour le commerçant.

Pour l'utilisateur, il peut avoir accès au distributeur vingt quatre heures sur vingt quatre et connaître à tout instant les films disponibles ainsi que la valeur de son compte.

Pour le commerçant, une telle installation élimine tout risque de fraude et permet une gestion efficace de ses produits.

Bien entendu, l'invention n'est pas limitée à l'exemple de réalisation donné précédemment mais elle en couvre toutes les variantes réalisées dans le même esprit.

REVENDICATIONS

1/ Installation permettant le stockage, la distribution et la remise en place de manière automatique de cassettes ou articles similaires, se présentant sous la forme d'une enceinte (1) contenant :

- des casiers (2,3) de rangement pour les articles (7) destinés à être loués ;

- un chariot mobile (9) de mise en place et d'enlèvement des articles (7) ;

- un système de vérification (22), caractérisée par le fait que :

- l'enceinte (1) présente une seule ouverture (5) pour l'introduction et la délivrance des articles (7), des moyens de vérification (22) desdits articles (7) étant disposés à l'intérieur de l'enceinte (1) en regard de cette ouverture ;

- les casiers de rangement (2,3) se présentent sous la forme de deux rangées de rayonnages parallèles disposés de part et d'autre d'un plan de symétrie passant par l'ouverture (5) d'introduction et de délivrance des objets (7) ;

- le chariot mobile (9) de mise en place et d'enlèvement est déplacé longitudinalement et verticalement selon le plan de symétrie précité et comporte un système de manipulation des objets pouvant prendre quatre positions décalées de 90° les unes par rapport aux autres, à savoir deux opposées selon l'axe de la machine et deux perpendiculaires à ce plan en regard des casiers de rangement.

2/ Installation selon la revendication 1, caractérisée par le fait qu'elle est associée à des moyens permettant l'utilisation au moyen d'une carte magnétique, et qui se composent essentiellement :

- d'une façade enfichable dans le mur ou la vitrine du magasin, cette façade comprenant :

. un écran de visualisation et un clavier de

- 10 -

de commande permettant à l'utilisateur de
dialoguer avec l'appareil,

. un lecteur de badge magnétique permettant le
règlement des accès,

. un système de codage-décodage (22) des articles permettant le contrôle et le rangement
de ces articles,

- une armoire électronique placée à l'intérieur du
magasin et comprenant essentiellement un ordinateur de
commande et de gestion permettant d'assurer. les différentes fonctions de la machine et de gérer les différents
points de gestion.

0184527

4

18

12

3

1

2

7

8

9

16

6

11

10

17

19

13

MONITEUR
VIDEO

22

LECTEUR DE
BADGE

5

CLAVIER DE
L'UTILISATEUR

FIG.1

FIG.2

FIG.3 coupe AA

FIG.4

0184527

0184527

FIG.5a

FIG.5b

FIG.5c

FIG.5d

FIG.5e

FIG.5f

FIG.6a

31    28    27

FIG.6b

7    27

FIG.6c

7    27

FIG.6d

7    27

FIG.6e

7    27

FIG.7

FIG.8

37

8

7

34

33

FIG.10

11

10

8

FIG.9 coupe A

37

36

35

34

8

32

33

7

0184527

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| | | | B 65 G    1/04 |
| A | EP-A-0 060 643  (K.J.A. MACIVER & SONS LTD.) <br> * Revendication 1; figures 1-25 * | 1,2 | |
| A | US-A-4 074 120  (ALLRED) <br> * Figure 1; colonne 1, ligne 46 - colonne 2, ligne 38 * | 1 | |
| A | PATENTS ABSTRACTS OF JAPAN, vol. 5, no. 189 (M-99) [861], 28 novembre 1981, page 42 M 99; & JP - A - 56 108 601 (ITOUKA KOUSAKUSHIYO K.K.) 28-08-1981 <br> * Abrégé; figure * | | |

|  |
|---|
| DOMAINES TECHNIQUES RECHERCHES (Int Cl 4) |
| B 65 G <br> G 07 F |

Le present rapport de recherche a ete etabli pour toutes les revendications

| Lieu de la recherche | Date d achevement de la recherche | Examinateur |
|---|---|---|
| LA HAYE | 23-01-1986 | MORRIS A.A. |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82